# EUROPEAN PATENT APPLICATION

(11) **EP 1 220 411 A1**
(43) Date of publication of application: **03.07.2002**
(21) Application number: 00204755.3
(22) Date of filing: 28.12.2000
(51) Int. Cl.: H02H 7/16

(54) **A medium voltage power factor controlled switchboard**

(71) Applicant: ABB T&D Technology Ltd., 8050 Zürich (CH)
(72) Inventor: Gemme, Carlo, 16166 Genova Quinto (IT); Breder, Henrik, 72347 Vasteras (SE); Heinemeyer, Ralf, 40882 Rattingen (DE)
(74) Representative: Giavarini, Francesco

(57) **Abstract**

A medium voltage power factor controlled switchboard comprising:
- at least an electric panel including one or more switching devices; and
- a control unit comprising computerised means that execute at least a predefined switching procedure, which regulates the operating status of said switching devices, so as to extinguish possible arching phenomena, in a predefined period of time.

## Description

The present invention relates to a medium voltage (MV) switchboard, which is power factor controlled and has improved characteristics.

Power factor controlled (PFC) switchboards, particularly for MV applications (i.e. for voltage values approximately from 1 KV to 50 KV), are known in the state art.

PFC switchboards have been introduced in order to improve the so-called "power quality" of the electric power, supplied to the load. With the term of "power quality", it is commonly meant the management of the supplied electric power, so as to avoid problems related to current, voltage or frequency deviations that would result in a failure of the load or the power distribution network. It is known that, for achieving a satisfactory power quality, it is essential the control of the power factor related to the electric power supplied to the load.

The power factor is commonly controlled by means of providing a suitable amount of reactive power to the load. Unfortunately, providing reactive power from the power distribution network to the load can be expensive to the user, due to the commonly adopted utility fee policies, especially if the load is characterised by a low power factor. For this reason, in the common practice, the requested amount of reactive power is generated locally, using a certain number of capacitor banks.

As it is known, a PFC switchboard comprises a primary switch and an internal power distribution line (comprising a plurality of phase bars) for providing power to a load. The primary switch is able to connect/disconnect the internal power distribution line to the power distribution network. A PFC switchboard comprises also a plurality of electric panels, each including a capacitor bank and a secondary switch for connecting/disconnecting said capacitor bank to the internal power distribution line.

A control unit is able to regulate the switching operation of each secondary switch, so as to supply a desired amount of reactive power to the load. In this manner, the achievement of an optimal power factor level can be ensured, without additional costs for the user.

It is known that a need, which is quite felt in the state of the art, is to reduce arching phenomena events, which may occur internally to the PFC switchboard. These arching phenomena are due to failures of the internal components of the switchboard. In PFC switchboards, arching phenomena events are relatively frequent and particularly dangerous.

This is due to the fact that, sometimes, the capacitor banks are subjected to failures. Moreover, in case of internal failure, a PFC switchboard is characterised by a higher fire load, due to oil ignition from the capacitor banks. Thus, arching phenomena can easily provoke damages to the other electric panels of the switchboard.

In order to try to overcome these problems, some technical solutions have been developed in the state of the art. Unfortunately, these traditional solutions have some drawbacks.

A first traditional approach consists of suitably over-sizing the components of the PFC switchboard in order to make them more robust. Thus, damages to the personnel are avoided, also in case of strong arching phenomena. The practice has shown that this approach is quite costly and can lead to a long system downtime, during which it is not possible to supply power to the load.

A second traditional approach consists of reducing, in an active manner, the duration of the arching phenomena. Pressure sensors are provided within each of the electric panel. These pressure sensors, which are connected to the control unit, detect the presence of arching phenomena inside the electric panel, to which they are associated. Then, the control unit provides instantaneously for opening all the switching devices of the switchboard that, in some way, allow the failure to be supplied with electric power. In this manner, the failure, which has originated the arching phenomena is insulated. With this approach, traditional switching delay co-ordination is overcome. Thus, the fault duration can be limited to about 100 ms. In this manner, it is possible to reduce the total energy of the arching phenomena and to avoid damages to electric panels, which are adjacent to the one affected by arching phenomena. This approach has the remarkable advantage that it is possible to avoid a long system downtime.

Unfortunately, due to the fact that the allowed fault duration is much larger than the normal current period, during the fault the current peak is always reached. Therefore, current peak limiting effects are not present and the panel components, located within the electric panel affected by arching phenomena, are subjected to high dynamic stresses that may provoke remarkable damages.

A further traditional approach, similar to the one just described, provides an optic sensor (normally an optic fibre) within each of the electric panels of the PFC switchboard. The optic sensor detects the presence of arching phenomena. In this case, the control unit provides to close an auxiliary protection switch device, which is connected between the internal power distribution line and earth. In this manner, the internal power distribution line is grounded and fault currents can be shunted from the failure point to a predefined conductor, which is able to withstand them. Response time shorter than 10 ms can be reached. Thus, current peaks, during a fault event, may be suitably avoided and arching phenomena energy may be effectively reduced. Unfortunately, due to the fact that the internal power distribution line is grounded, a system down time is still required, until the fault cause is removed from by an appropriate maintenance intervention.

The main aim of the present invention is to provide a MV PFC switchboard, which allows providing the reduction of the energy of internal arching phenomena, so as to overcome the drawbacks of the state of the art, described above.

Within this aim, another object of the present invention is to provide a MV PFC switchboard, which provides the reduction of the energy of internal arching phenomena avoiding peak current effects and relatively long interruptions of the power supply to the load.

Not the least object of the present invention is to provide a MV PFC switchboard, which is easy to the design, easy to install and maintain with a relatively low effort in term of time and costs.

Thus, the present invention provides a MV PFC switchboard comprising a first switching device, which is electrically connected to a first power distribution line, and a second power distribution line, which is electrically connected to said first switching device, so as to provide the electric power supply to a load. Further, the MV PFC switchboard, according to the present invention, comprises one or more electric panels, which comprise:
- a second switching device, electrically connected to said second power distribution line, and
- a capacitor bank, electrically connected to said second switching device; and
- sensor means for generating detection signals indicative of the presence of arching phenomena.

Further, the MV PFC switchboard, according to the present invention, comprises a third switching device, which is arranged in at least one of said electrical panels. The MV PFC switchboard, according to the present invention, comprises also a control unit, which receives the detection signals provided by said sensor means and generates command signals for controlling the operating status of said first switching device and/or said second switching device and/or said third switching device.

The MV PFC switchboard, according to the present invention, is characterised in that said control unit comprises computerised means that are able to execute, in case of presence of arching phenomena, at least a predefined switching procedure. Said predefined switching procedure regulates the operating status of said first switching device and/or said second switching device and/or said third switching device, so as to extinguish, in a first predefined period of time, said arching phenomena and to restrict, to a second predefined period of time, the duration of possible interruptions of the electric power supply to the load.

Further characteristics and advantages of the invention shall emerge more clearly from the description of preferred but not exclusive embodiments of the MV PFC switchboard, according to the present invention, which are illustrated, purely by way of example and without limitation, in the attached drawings, wherein:
figure 1 is a diagram, which illustrates a preferred embodiment of the MV PFC switchboard, according to the present invention; and
figure 2 is a diagram, which illustrates another preferred embodiment of the MV PFC switchboard, according to the present invention; and
figure 3 is a diagram, which schematically illustrates a sequence of operation phases, performed by a control unit, included in the MV PFC switchboard, according to the present invention.

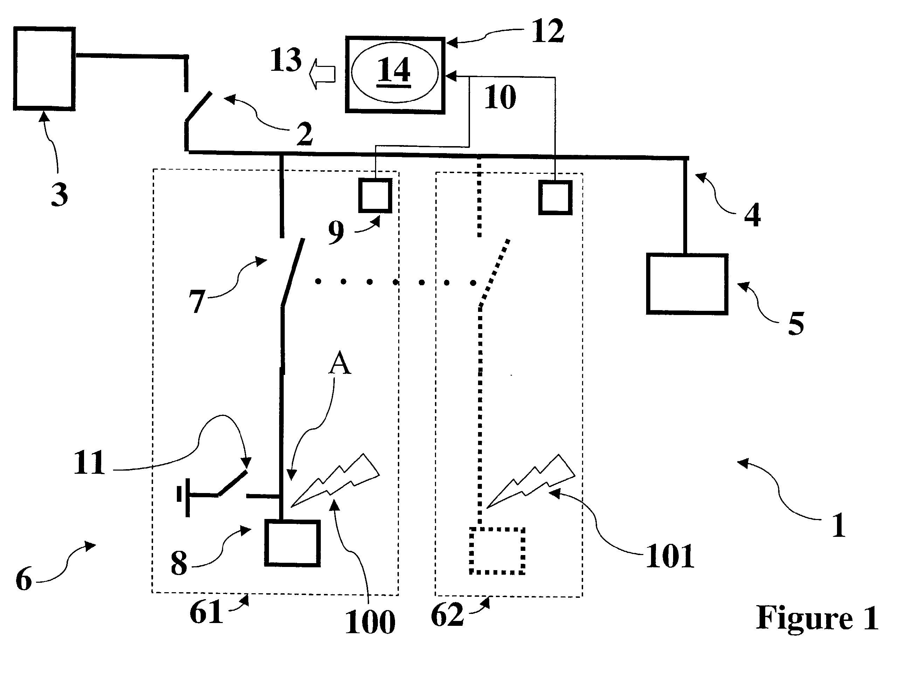

Referring now to figure 1, the MV PFC switchboard, according to the present invention, (reference 1) comprises a first switching device 2 (e.g. a circuit breaker), which is electrically connected to a first power distribution line 3, which may be included in a power distribution network. The MV PFC switchboard 1 comprises also a second power distribution line 4, which is electrically connected to the first switching device 2. The second power distribution line 4 is aimed at providing the electric power supply to a load 5. According to the needs, the second power distribution line 4 may comprise a plurality of phase bars.

Further, the MV PFC switchboard 1 comprises one or more electric panels 6. An electric panel 6 comprises a second switching device 7, electrically connected to the second power distribution line 4, and a capacitor bank 8, electrically connected to the second switching device 7. Further, an electric panel 6 comprises sensor means 9 (for example a light sensor or the like) for generating detection signals 10, which are indicative of the presence of arching phenomena inside the electric panel 6.

The MV PFC switchboard 1 comprises also at least a third switching device 11, which is included in at least one (reference 61) of the electrical panels 6. The third switching device 11 is arranged according to a predefined state of connection. For example, as represented in figure 1, the third switching device 11 may be arranged, internally to the electrical panel 61, according to a first predefined state of connection, which may provide, for the third switching device 11, a first connection to earth and a second connection to a point (reference "A"), which is located downstream the second switching device 7 and upstream to the capacitor bank 8.

Alternatively, the third switching device 11 may be also arranged according to a second predefined state of connection. This second predefined state of connection may provide, for the third switching device 11, a first connection to earth and a second connection to a point (reference "B"), located upstream the second switching device 7.

The MV PFC switchboard 1 comprises also a control unit 12, which receives the detection signals 10 and generates command signals 13 for controlling the operating status of the first switching device 2 and/or the second switching device 7 and/or the third switching device 11.

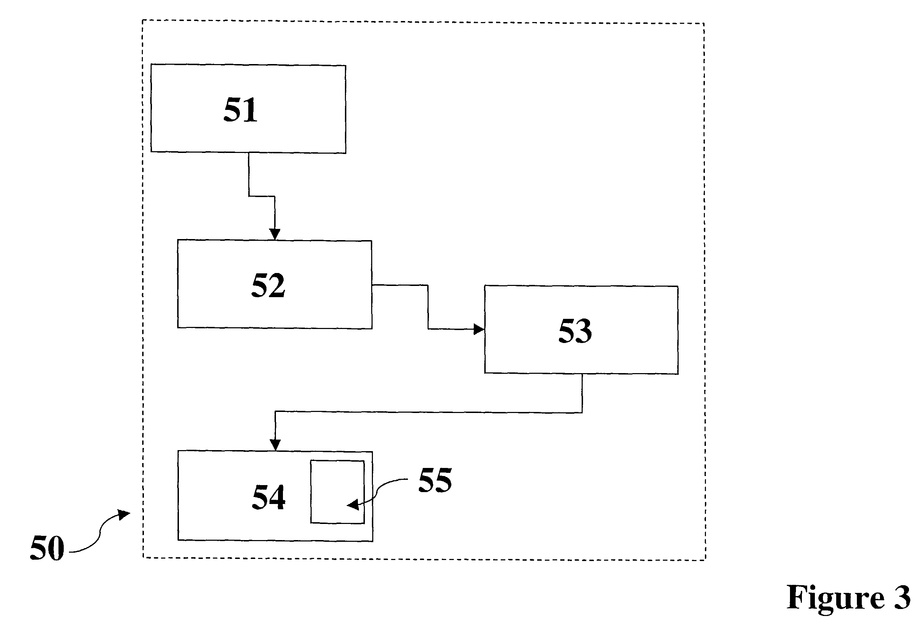

The peculiarity of the MV PFC switchboard 1 consists of the fact that the control unit 12 comprises computerised means 14 that are able to execute, in case arching phenomena occur, at least a predefined switching procedure (reference 50 of figure 3). The switching procedure 50 is capable to regulate the operating status of the first switching device 2 and/or the second switching device 7 and/or the third switching device 11, so as to extinguish, in a first predefined period of time, the arching phenomena. Moreover, the switching procedure 50 provides for restricting, within a second predefined period of time, the duration of possible interruptions of the electric power supply to the load 5.

Preferably, the switching procedure 50 comprises (figure 3) a receiving phase 51, in which the computerised means 14 receive the detection signals 10 from the sensor means 9. Then, an identification phase 52, in which the computerised means identify the location of the arching phenomena, may be executed.

The identification phase 52 may be advantageously followed by a checking phase 53, in which the computerised means 14 check the predefined state of connection of the third switching device 11.

Finally, it may be executed a switching phase 54, in which the computerised means provides, based on the results of the checking phase 53, a predefined switching sequence 55.

Advantageously, the predefined switching sequence 55 (and therefore the switching procedure 50) is chosen, according to the predefined state of connection of the third switching device 11 and, obviously, on the base of the detection signals 10.

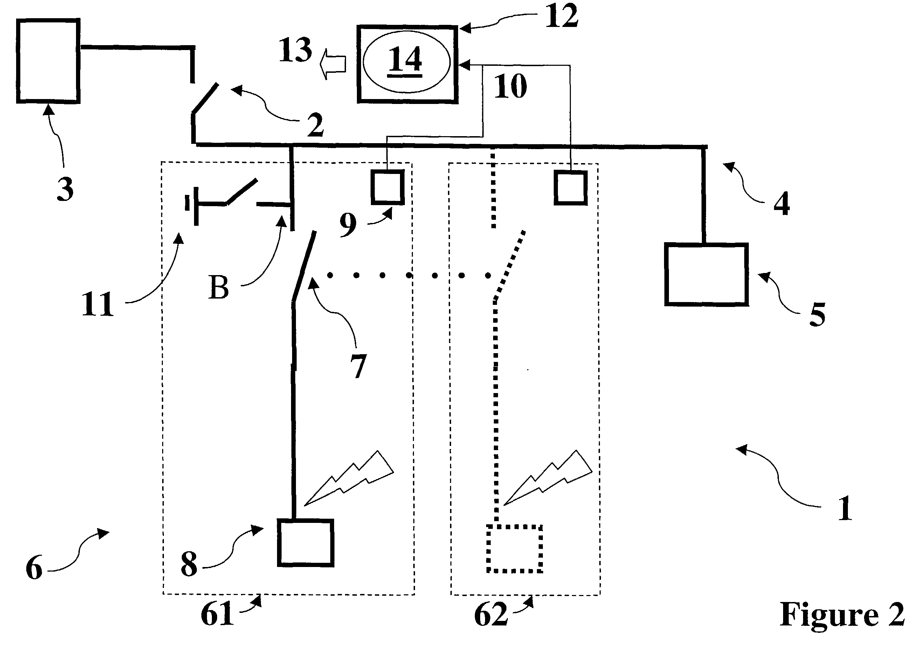

For example, if the third switching device 11 is arranged according to the mentioned first state of connection and the arching phenomena occur in the electric panel, where the third switching device is located (this case is indicated by the reference 100 of figure 1), the switching sequence 55 may advantageously comprise the following steps:
i) closing the third switching device 11; and
ii) opening the second switching device 7, related to the electric panel 61 (in which said arching phenomena are located); and
iii) opening the third switching device 11.
   Alternatively, if the third switching device 11 is arranged according to the mentioned first state of connection and arching phenomena occur in an electric panel 62, different from that one, in which the third switching device is located (reference 101 of figure 1), the switching sequence 55 may advantageously comprise the following steps:
iv) closing the third switching device 11; and
v) opening the second switching device 7, related to the electric panel 62 (in which the arching phenomena are located);
vi) opening the second switching device 7 related to the electric panel 61 (in which the third switching device is located); and
vii) opening the third switching device 11; and
viii) closing the second switching device related to the electric panel 61 (in which the third switching device is located).
   It should be noticed that, in both the switching sequences 55 described above, the third switching device 11 is operated immediately (steps i) and iv)). Normally, the intervention time may be lower than 10ms. Thus, the arching phenomena energy can be promptly reduced and it is possible not to reach the current peak. In this manner, the extinction of the arching phenomena may be obtained in a first predefined period T1 = Tₚₕ + Tₜₕ, ≈ 10ms. In fact, Tₚₕ is the time required for the execution of phases 51-53 (which is negligible) and Tₜₕ is the time required for closing the third switching device 11 towards earth. After the intervention of the third switching device 11, it is necessary to insulate the fault in order to restore the electric power supply to the load. This is obtained in described steps ii)-iii) and v)-viii), by means of switching suitably the second switching devices 7 of panels 61 and/or 62. The duration of the power supply interruption may be restricted to a second predefined period T2 = Tₚₕ + Tₜₕ+ Tᵣₑ≈90 ms., where Tᵣₑ is the time for executing steps ii)-iii) and v)-viii).
   According to another preferred embodiment of the present invention (see figure 2) if the third switching device 11 is arranged according to the mentioned second state of connection, the switching sequence 55 may advantageously comprise the following steps:
ix) closing the third switching device 11; and
x) opening the second switching device 7 related to the electric panel 61 or 62 (i.e. the second switching device 7 related to electric panel, in which the arching phenomena are located); and
xi) opening the first switching device 2; and
xii) opening the third switching device 11; and
xiii) closing the first switching device 2.

Also in this case, the extinction of the arching phenomena can be obtained in a first predefined period T1, which lasts (around 10 ms) until the step ix) is executed. Accordingly, it is possible to restrict the system downtime to a second predefined period T2, which lasts (around 120 ms) until the step xiii) is executed.

The MV PFC switchboard, according to the present invention allows achieving the intended aims and objects.

The restriction of duration of arching phenomena duration and system downtime respectively to the mentioned first and second predefined periods of time allows improving remarkably the reliability of a MV PFC switchboard. In fact it is possible to reduce damages provoked by arching phenomena and, in the same time, to guarantee a satisfactory power supply to the load, even in case of fault.

Further, it is reduced the need of heavy maintenance effects due to the fact that the energy of the arching phenomena is kept always at relatively low levels (current peak effects can be easily avoided).

Finally, the practice has proven that the MV PFC switchboard, according to the present invention, is of relatively easy and low cost realisation.

## Claims

1. A MV PFC switchboard comprising:
- a first switching device, which is electrically connected to a first power distribution line; and
- a second power distribution line, which is electrically connected to said first switching device, for providing an electric power supply to a load; and
- one or more electric panels, comprising a second switching device, which is electrically connected to said second power distribution line and a capacitor bank, which is electrically connected to said second switching device and sensor means for generating detection signals indicative of the presence of arching phenomena; and
- at least a third switching device, which is arranged internally to at least one of said electrical panels; and
- a control unit, which receives said detection signals and which generates command signals for controlling the operating status of said first switching device and/or second switching device and/or said third switching device;
**characterised in that** said control unit comprises computerised means that are able to execute, in case of presence of arching phenomena, at least a predefined switching procedure, said switching procedure regulating the operating status of said first switching device and/or said second switching device and/or said third switching device, so as to extinguish, in a first predefined period of time, said arching phenomena and restrict, within a second predefined period of time, the duration of possible interruptions of the electric power supply to the load.

2. A MV PFC switchboard, according to claim 1, **characterised in that** said switching procedure is chosen, according to a predefined state of connection, according to which said third switching device is arranged internally to said electric panel.

3. A MV PFC switchboard, according to claims 1 and 2, **characterised in that** said switching procedure is chosen also on the base of said detection signals.

4. A MV PFC switchboard according to one or more of previous claims, **characterised in that** said sequence procedure comprises the following phases:
- a receiving phase, in which said computerised means receive said detection signals from said sensor means; and
- an identification phase, in which said computerised means identify the location of said arching phenomena; and
- a checking phase, in which said computerised means check the predefined state of connection of said third switching device; and
- a switching phase, in which said computerised means executes, based on the results of said checking phase, a predefined switching sequence.

5. A MV PFC switchboard, according to one or more of previous claims, **characterised in that** said third switching device is arranged, internally to said electrical panel, according to a first predefined state of connection, which provides for said third switching device:
- a first connection to earth; and
- a second connection to a point located downstream said second switching device.

6. A MV PFC switchboard, according to one or more of claims from 1 to 4, **characterised in that** said third switching device is arranged, internally to said electrical panel, according to a second predefined state of connection, which provides for said third switching device:
- a first connection to earth; and
- a second connection to a point located upstream said second switching device.

7. A MV PFC switchboard, according to claim 5, **characterised in that** said switching sequence comprises, in case said third switching means are arranged according to said first predefined state of connection, the following steps:
- closing said third switching device; and
- opening the second switching device, related to the electric panel in which the arching phenomena are located; and
- opening said third switching device.

8. A MV PFC switchboard, according to claim 5, **characterised in that** said switching sequence comprises, in case said third switching means are arranged according to said first predefined state of connection, the following steps:
- closing said third switching device; and
- opening the second switching device, related to the electric panel in which said arching phenomena are located; and
- opening the second switching device related to the electric panel in which said third switching device is located; and
- opening said third switching device; and
- closing the second switching device related to the electric panel in which said third switching device is located.

9. A MV PFC switchboard, according to claim 6, **characterised in that** fact that said switching sequence comprises, in case said third switching means are arranged according to said second state of connection, the following steps:
- closing said third switching device; and
- opening the second switching device related to the electric panel in which said arching phenomena are located; and
- opening said first switching device; and
- opening said third switching device; and
- closing said first switching device.
